# EUROPEAN PATENT APPLICATION

(11) **EP 3 267 760 A1**
(43) Date of publication of application: **10.01.2018**
(21) Application number: 16761579.8
(22) Date of filing: 01.03.2016
(51) Int. Cl.: H04W 76/02, H04W 12/08, H04W 84/12

(54) **IMAGE PROCESSING DEVICE AND COMMUNICATION METHOD**

(30) Priority: 06.03.2015 JP 2015044960
(71) Applicant: Kyocera Document Solutions Inc., Osaka-shi, Osaka 540-8585 (JP)
(72) Inventor: KITAO, Tomoyuki, Osaka-shi Osaka 540-8585 (JP)
(74) Representative: Plougmann Vingtoft a/s
(86) International application number: PCT/JP2016/056254
(87) International publication number: WO 2016/143609

(57) **Abstract**

An image processing apparatus (10) includes: a first communication processing portion (53) configured to, upon receiving, from a wireless communication apparatus (20), a connection request for a connection via any of a plurality of wireless networks, establish a communication connection between the wireless communication apparatus (20) and the image processing apparatus (10); and a second communication processing portion (54) configured to, upon receiving, from the wireless communication apparatus (20), a connection request for a connection to a communication device (40) via the image processing apparatus (10), determine whether or not to permit an establishment of a communication connection between the wireless communication apparatus (20) and the communication device (40) based on a wireless network used by the wireless communication apparatus (20) among the plurality of wireless networks.

## Description

### TECHNICAL FIELD

The present invention relates to an image processing apparatus capable of performing a wireless communication, and a communication method.

### BACKGROUND ART

In general, there is known an image processing apparatus, such as a printer, that can perform a wireless communication. This type of image processing apparatus can perform a data communication wirelessly with a wireless communication apparatus such as a tablet terminal. In addition, this type of image processing apparatus may be connected to a network such as a LAN (Local Area Network) (see, for example, PTL 1).

### CITATION LIST

### [PATENT LITERATURE]

[PTL 1] Japanese Patent Application Publication No. 2007-312088

### SUMMARY OF THE INVENTION

### PROBLEMS TO BE SOLVED BY THE INVENTION

Meanwhile, there may be a case where a wireless communication apparatus that can perform a communication with an image processing apparatus can access a network connected to the image processing apparatus, via the image processing apparatus. In this case, the wireless communication apparatus can perform a data communication with a communication device, such as a server, connected to the network. On the other hand, there may be a problem on security if all the wireless communication apparatuses that can perform communications with the image processing apparatus, are allowed to access the network connected to the image processing apparatus.

The present invention has been made in view of such conventional circumstances, and it is an object of the present invention to provide an image processing apparatus and a communication method that can maintain the security of a network connected to the image processing apparatus, and improve the usefulness of wireless communication apparatuses that perform wireless communications with the image processing apparatus.

### SOLUTION TO THE PROBLEMS

An image processing apparatus according to an aspect of the present invention includes a first communication processing portion and a second communication processing portion. The first communication processing portion is configured to, upon receiving, from a wireless communication apparatus, a connection request for a connection via any of a plurality of wireless networks, establish a communication connection between the wireless communication apparatus and the image processing apparatus. The second communication processing portion is configured to, upon receiving, from the wireless communication apparatus, a connection request for a connection to a communication device via the image processing apparatus, determine whether or not to permit an establishment of a communication connection between the wireless communication apparatus and the communication device based on a wireless network used by the wireless communication apparatus among the plurality of wireless networks.

A communication method according to another aspect of the present invention includes a first step and a second step. In the first step, upon receiving, from a wireless communication apparatus, a connection request for a connection via any of a plurality of wireless networks, a communication connection between the wireless communication apparatus and an image processing apparatus is established. In the second step, upon receiving, from the wireless communication apparatus, a connection request for a connection to a communication device via the image processing apparatus, it is determined whether or not to permit an establishment of a communication connection between the wireless communication apparatus and the communication device based on a wireless network used by the wireless communication apparatus among the plurality of wireless networks.

### ADVANTAGEOUS EFFECTS OF THE INVENTION

According to the present invention, it is possible to realize an image processing apparatus and a communication method that can maintain the security of a network connected to the image processing apparatus, and improve the usefulness of wireless communication apparatuses that perform wireless communications with the image processing apparatus.

### BRIEF DESCRIPTION OF THE DRAWINGS

[FIG. 1] FIG. 1 is a block diagram showing a configuration of a communication system including an image processing apparatus according to an embodiment of the present invention.
[FIG. 2] FIG. 2 is a diagram showing a configuration of the image processing apparatus according to the embodiment of the present invention.
[FIG. 3] FIG. 3 is a flowchart showing an example of a first communication process executed by the image processing apparatus according to the embodiment of the present invention.
[FIG. 4] FIG. 4 is a flowchart showing an example of a second communication process executed by the image processing apparatus according to the embodiment of the present invention.
[FIG. 5] FIG. 5 is a flowchart showing an example of an access permission process executed by the image processing apparatus according to the embodiment of the present invention.
[FIG. 6] FIG. 6 is a flowchart showing an example of a job execution process executed by the image processing apparatus according to the embodiment of the present invention.

### DESCRIPTION OF EMBODIMENTS

The following describes an embodiment of the present invention with reference to the accompanying drawings for the understanding of the invention. It should be noted that the following embodiment is an example of a specific embodiment of the present invention and should not limit the technical scope of the present invention.

### [Communication system 100]

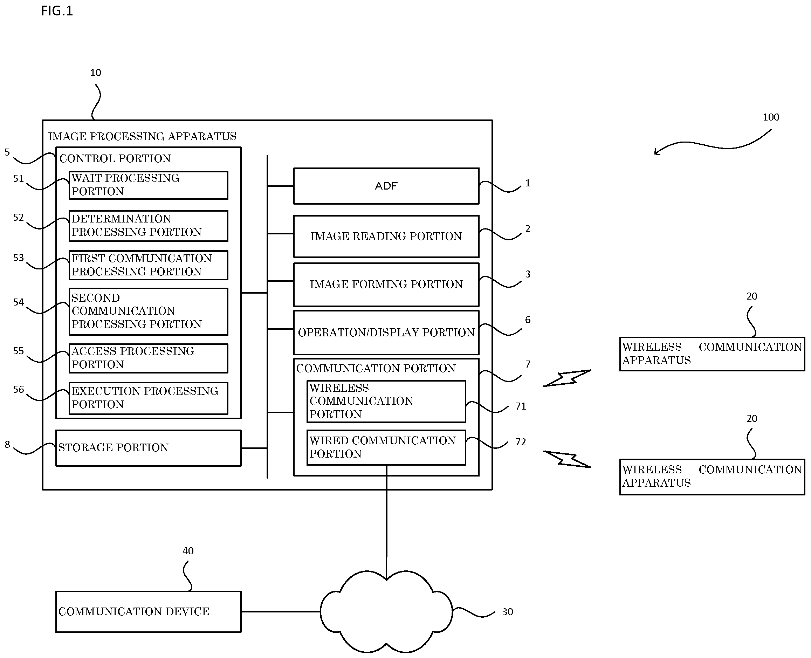

As shown in FIG. 1, a communication system 100 which includes an image processing apparatus 10 according to an embodiment of the present invention, includes the image processing apparatus 10, one or more wireless communication apparatuses 20, and a communication device 40. Each of the wireless communication apparatuses 20 is an information processing apparatus such as a smartphone. The communication device 40 is an information processing apparatus such as a server. The image processing apparatus 10 and the communication device 40 are communicably connected via a communication network 30 such as a LAN.

The image processing apparatus 10 is configured to wirelessly perform data communications with the wireless communication apparatuses 20. In addition, the image processing apparatus 10 is configured to wirelessly perform data communications with the communication device 40 via the communication network 30.

### [Outlined configuration of image processing apparatus 10]

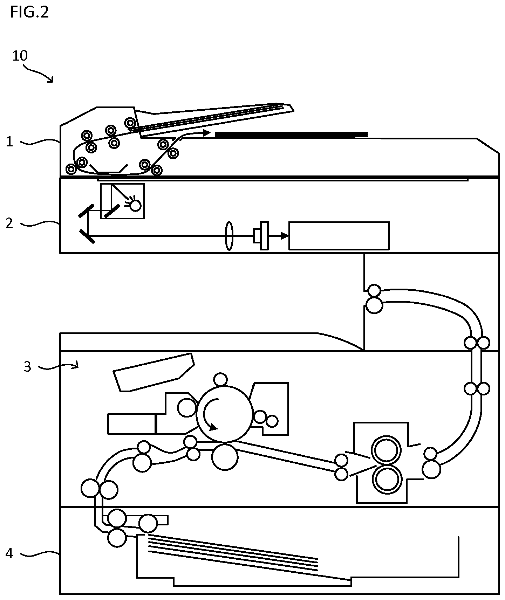

In the following, an outlined configuration of the image processing apparatus 10 according to the embodiment of the present invention is described with reference to FIG. 1 and FIG. 2. Here, FIG. 2 is a schematic cross-sectional diagram showing a configuration of the image processing apparatus 10.

As shown in FIG. 1 and FIG. 2, the image processing apparatus 10 includes an ADF 1, an image reading portion 2, an image forming portion 3, a sheet feed portion 4, a control portion 5, an operation/display portion 6, a communication portion 7, and a storage portion 8. The image processing apparatus 10 is a multifunction peripheral having a plurality of functions such as a facsimile function and a copy function, as well as a scan function for reading image data from a document sheet, and a print function for forming an image based on image data. In addition, the present invention is applicable to image processing apparatuses such as a scanner apparatus, a printer apparatus, a facsimile apparatus, and a copier.

The ADF 1 is an automatic document feeding device that includes a document sheet setting portion, a plurality of conveyance rollers, a document sheet pressing, and a sheet discharge portion, and conveys a document sheet so that the document sheet is read by the image reading portion 2. The image reading portion 2 includes a document sheet table, a light source, a plurality of mirrors, an optical lens, and a CCD (Charge Coupled Device), and is configured to read image data from a document sheet.

The image forming portion 3 is configured to form an image by an electrophotographic system based on image data read by the image reading portion 2, or image data input from an external information processing apparatus such as the wireless communication apparatus 20. Specifically, the image forming portion 3 includes a photoconductor drum, a charging device, a laser scanning unit (LSU), a developing device, a transfer roller, a cleaning device, a fixing roller, a pressure roller, and a sheet discharge tray. In the image forming portion 3, an image is formed on a sheet that is supplied from the sheet feed portion 4, and the sheet with the image formed thereon is discharged onto the sheet discharge tray.

The control portion 5 includes control equipment such as CPU, ROM, and RAM that are not shown. The CPU is a processor for executing various types of calculation processes. The ROM is a nonvolatile storage portion in which various types of information such as control programs for causing the CPU to execute various types of processes are stored in advance. The RAM is a volatile storage portion that is used as a temporary storage memory (working area) for the various types of processes executed by the CPU. The control portion 5 causes the CPU to execute processes in accordance with various types of control programs that have been stored in the ROM in advance. This allows the image processing apparatus 10 to be controlled by the control portion 5 comprehensively. It is noted that the control portion 5 may be formed as an electronic circuit such as an integrated circuit (ASIC), and may be a control portion provided independently of a main control portion that comprehensively controls the image processing apparatus 10.

The operation/display portion 6 includes a display portion and an operation portion. The display portion is, for example, a liquid crystal display and displays various types of information based on control instructions from the control portion 5. The operation portion is composed of, for example, operation keys or a touch panel through which various types of information are input to the control portion 5 based on user operations.

The communication portion 7 is a communication interface configured to perform data communications with external communication devices. Specifically, as shown in FIG. 1, the communication portion 7 includes a wireless communication portion 71 and a wired communication portion 72.

The wireless communication portion 71 is configured to perform wireless data communications with the wireless communication apparatuses 20. For example, the wireless communication portion 71 performs wireless data communications with the wireless communication apparatuses 20 in accordance with a communication standard for a wireless LAN, such as Wi-Fi Direct™.

The wired communication portion 72 is configured to perform data communications with the communication device 40 connected to the communication network 30, via the communication network 30 that is wiredly connected to the image processing apparatus 10.

The storage portion 8 is a storage device such as a SSD (Solid State Drive) or a HDD (Hard Disk Drive). It is noted that a nonvolatile memory such as an EEPROM™(Electrically Erasable and Programmable Read-Only Memory) may be provided in the control portion 5, and the storage portion 8 may be omitted.

Meanwhile, there may be a case where the wireless communication apparatuses 20 that can perform communications with the image processing apparatus 10, can access the communication network 30 connected to the image processing apparatus 10, via the image processing apparatus 10. In this case, the wireless communication apparatuses 20 can perform data communications with the communication device 40 connected to the communication network 30. On the other hand, there may be a problem on security if all the wireless communication apparatuses 20 that can communicate with the image processing apparatus 10 are allowed to access the communication network 30 connected to the image processing apparatus 10. However, the image processing apparatus 10 according to the embodiment of the present invention can maintain the security of the communication network 30 connected to the image processing apparatus 10, and improve the usefulness of the wireless communication apparatuses 20 that perform wireless communications with the image processing apparatus 10.

Specifically, in the image processing apparatus 10, the wireless communication portion 71 can perform communications with the wireless communication apparatuses 20 by using a plurality of wireless networks. Here, in a case where the wireless communication portion 71 performs a wireless communication in accordance with a communication standard for a wireless LAN, the plurality of wireless networks are each identified by an SSID (Service Set Identifier).

For example, in the image processing apparatus 10, the wireless communication portion 71 can establish communication connections with the wireless communication apparatuses 20 by using three wireless networks identified by a first SSID, a second SSID and a third SSID as the plurality of wireless networks. It is noted that the number of wireless networks that can be used by the wireless communication portion 71 may be two (2) or four (4) or more.

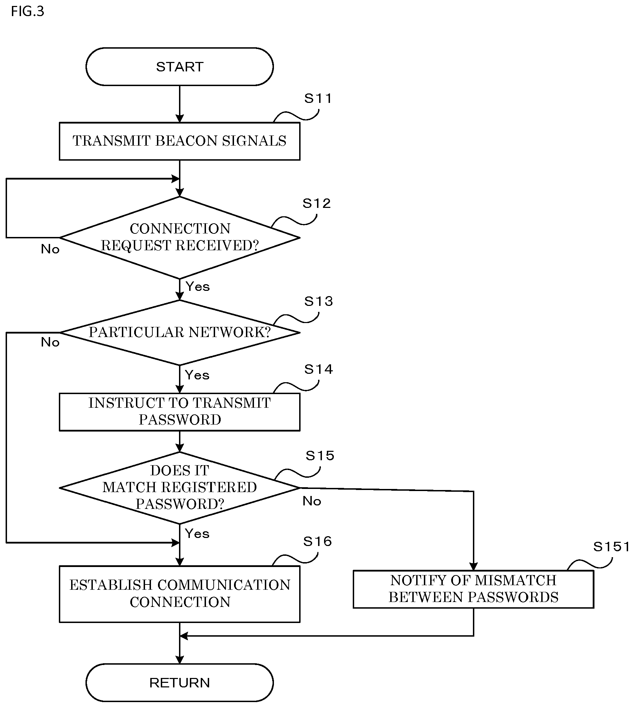

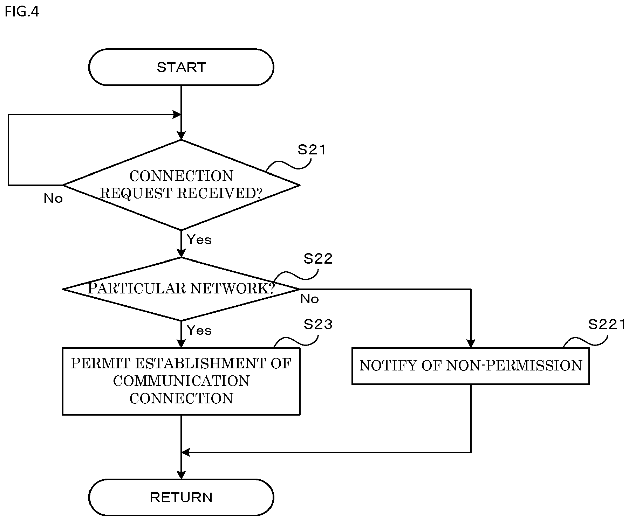

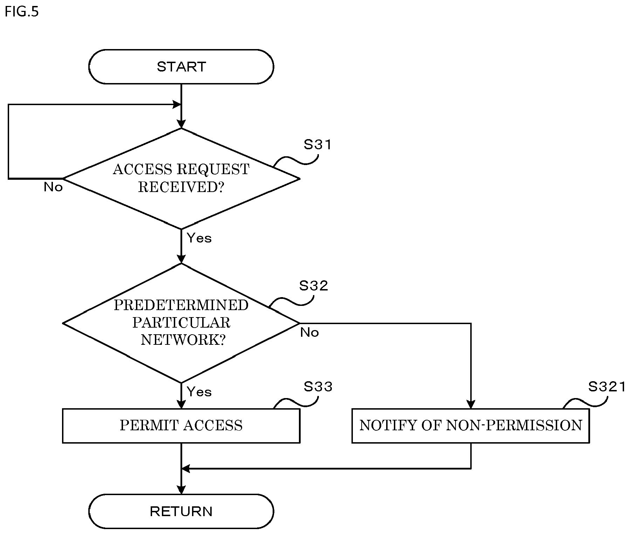

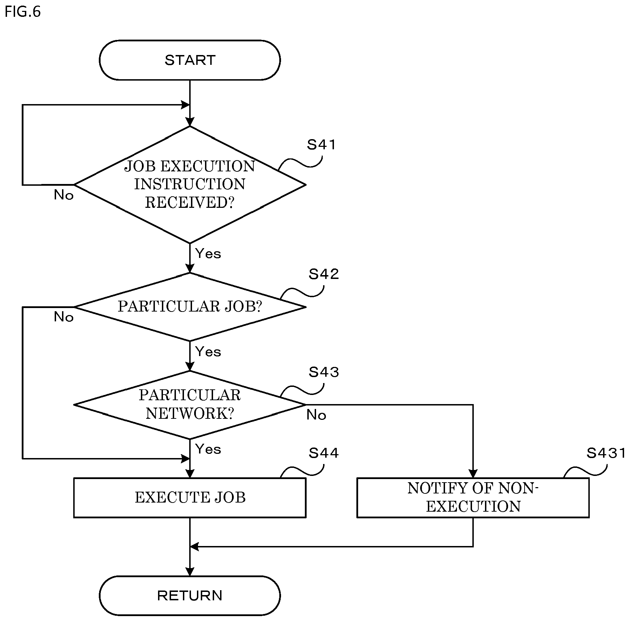

On the other hand, communication processing programs for causing the CPU to execute a first communication process (see the flowchart of FIG. 3), a second communication process (see the flowchart of FIG. 4), an access permission process (see the flowchart of FIG. 5), and a job execution process (see the flowchart of FIG. 6), are stored in the ROM of the control portion 5 in advance. It is noted that the communication processing programs may be recorded on a computer-readable recording medium such as a CD, a DVD, or a flash memory, and may be installed from the recording medium to the storage portion 8.

As shown in FIG. 1, the control portion 5 includes a wait processing portion 51, a determination processing portion 52, a first communication processing portion 53, a second communication processing portion 54, an access processing portion 55, and an execution processing portion 56. Specifically, the control portion 5 functions as the wait processing portion 51, the determination processing portion 52, the first communication processing portion 53, the second communication processing portion 54, the access processing portion 55, and the execution processing portion 56 by causing the CPU to execute the communication processing programs stored in the ROM.

The wait processing portion 51 waits for a connection request for a connection via any of the plurality of wireless networks to be received from any of the wireless communication apparatuses 20.

For example, the wait processing portion 51 causes the wireless communication portion 71 to transmit a plurality of beacon signals corresponding to the first SSID, the second SSID, and the third SSID, and waits for a connection request specifying any of the plurality of beacon signals to be received from any of the wireless communication apparatuses 20. It is noted that the wait processing portion 51 may wait for a connection request to be received from any of the wireless communication apparatuses 20, by causing the wireless communication portion 71 not to transmit one or more beacon signals among the plurality of beacon signals. For example, the wait processing portion 51 may cause the wireless communication portion 71 not to transmit a beacon signal, among the plurality of beacon signals, that corresponds to at least one particular network that is described below.

The determination processing portion 52 determines whether or not the wireless communication apparatus 20 has an authority to connect to a particular network among the plurality of wireless networks.

For example, in the image processing apparatus 10, two wireless networks identified by the first SSID and the second SSID are set as the particular networks. Here, the determination processing portion 52 determines whether or not the wireless communication apparatus 20 has an authority to connect to the particular networks. It is noted that the number of wireless networks that are set as the particular networks may be one (1) or three (3) or more.

Specifically, the determination processing portion 52 sends a password transmission instruction to the wireless communication apparatus 20, wherein the password transmission instruction instructs the wireless communication apparatus 20 to transmit a password that is input by the user of the wireless communication apparatus 20. The determination processing portion 52 then determines that the wireless communication apparatus 20 has an authority to connect to a particular network, when a password transmitted from the wireless communication apparatus 20 in response to the password transmission instruction matches a corresponding one of registered passwords that had been set in advance in correspondence with the particular networks.

It is noted that the determination processing portion 52 may determine that the wireless communication apparatus 20 has an authority to connect to a particular network, when an apparatus identification information piece, such as a MAC address, transmitted from the wireless communication apparatus 20 matches a correponding one of apparatus identification information pieces that had been registered in advance in correspondence with the particular networks.

The first communication processing portion 53 establishes a communication connection between a wireless communication apparatus 20 and the image processing apparatus 10 when a connection request for a connection via any of the plurality of wireless networks is received from the wireless communication apparatus 20.

Here, upon receiving a connection request for a connection via a particular network from a wireless communication apparatus 20, the first communication processing portion 53 determines whether or not to permit an establishment of a communication connection between the wireless communication apparatus 20 and the image processing apparatus 10 based on the determination result of the determination processing portion 52. That is, the first communication processing portion 53 does not permit an establishment of a communication connection between the wireless communication apparatus 20 and the image processing apparatus 10 when the determination processing portion 52 determines that the wireless communication apparatus 20 does not have an authority to connect to the particular network. For example, the first communication processing portion 53 notifies, to the wireless communication apparatus 20 that was determined by the determination processing portion 52 as not having an authority to connect to the particular network, that the wireless communication apparatus 20 does not have an authority to connect to the particular network.

Upon receiving a connection request for a connection to the communication device 40 via the image processing apparatus 10 from any of the wireless communication apparatuses 20, the second communication processing portion 54 determines whether or not to permit an establishment of a communication connection between the wireless communication apparatus 20 and the communication device 40 based on the wireless network used by the wireless communication apparatus 20.

Specifically, in a case where the wireless network used by the wireless communication apparatus 20 is a particular network, the second communication processing portion 54 permits an establishment of a communication connection between the wireless communication apparatus 20 and the communication device 40. For example, the second communication processing portion 54 forwards packet data that is transmitted from the wireless communication apparatus 20, to the communication device 40 by using the wired communication portion 72.

On the other hand, in a case where the wireless network used by the wireless communication apparatus 20 is not a particular network, the second communication processing portion 54 does not permit an establishment of a communication connection between the wireless communication apparatus 20 and the communication device 40. For example, the second communication processing portion 54 notifies, to the wireless communication apparatus 20, that the wireless communication apparatus 20 does not have an authority to access the communication network 30.

The access processing portion 55, upon receiving, from any of the wireless communication apparatuses 20, an access request for access to the storage portion 8 that stores setting information of the image processing apparatus 10, determines whether or not to permit the wireless communication apparatus 20 to access the storage portion 8 based on the particular network used by the wireless communication apparatus 20. For example, the setting information stored in the storage portion 8 includes the registered passwords.

For example, the access processing portion 55 permits the wireless communication apparatus 20 to access the storage portion 8 when the wireless network used by the wireless communication apparatus 20 is the particular network identified by the first SSID. On the other hand, when the wireless network used by the wireless communication apparatus 20 is not the particular network identified by the first SSID, the access processing portion 55 notifies, to the wireless communication apparatus 20, that the wireless communication apparatus 20 does not have an authority to access the storage portion 8.

The execution processing portion 56, upon receiving a job execution instruction to execute a predetermined particular job from any of the wireless communication apparatuses 20, determines whether or not to execute the particular job, based on the wireless network used by the wireless communication apparatus 20. For example, the particular job includes a print job that causes the image forming portion 3 to execute a print process.

For example, the execution processing portion 56 executes the particular job when the wireless network used by the wireless communication apparatuses 20 that had transmitted the job execution instruction to execute the particular job, is any of the two wireless networks identified by the first SSID or the second SSID. On the other hand, when the wireless network used by the wireless communication apparatuses 20 that had transmitted the job execution instruction to execute the particular job, is the wireless network identified by the third SSID, the execution processing portion 56 notifies, to the wireless communication apparatus 20, that the wireless communication apparatus 20 does not have an authority to execute the particular job.

### [First communication process]

The following describes, with reference to FIG. 3, an example of the procedure of the first communication process that is executed by the control portion 5 in the image processing apparatus 10. Here, steps S11, S12, ... represent numbers assigned to the processing procedures (steps) executed by the control portion 5. It is noted that the control portion 5 executes the first communication process in a case where the communication function of the wireless communication portion 71 has been set to "valid" by a setting operation performed by the user on the operation/display portion 6.

### <Step S11>

First, in step S11, the control portion 5 causes the wireless communication portion 71 to transmit a plurality of beacon signals corresponding to the first SSID, the second SSID, and the third SSID.

### <Step S12>

In step S12, the control portion 5 determines whether or not a connection request specifying any of the plurality of SSIDs has been received from any of the wireless communication apparatuses 20.

Upon determining that a connection request specifying any of the plurality of SSIDs has been received from any of the wireless communication apparatuses 20 (Yes side at S12), the control portion 5 moves the process to step S13. In addition, upon determining that a connection request specifying any of the plurality of SSIDs has not been received from any of the wireless communication apparatuses 20 (No side at S12), the control portion 5, in step S12, waits for a connection request specifying any of the plurality of SSIDs to be received. Here, the processes of step S11 and step S12 are executed by the wait processing portion 51 of the control portion 5.

### <Step S13>

In step S13, the control portion 5 determines whether or not the wireless network specified in the connection request received in step S12 is any of the particular networks.

Upon determining that the wireless network specified in the connection request received in step S12 is any of the particular networks (Yes side at step S13), the control portion 5 moves the process to step S14. In addition, upon determining that the wireless network specified in the connection request received in step S12 is not any of the particular networks (No side at step S13), the control portion 5 moves the process to step S16.

### <Step S14>

In step S14, the control portion 5 sends a password transmission instruction to the wireless communication apparatus 20 that had transmitted the connection request received by the control portion 5 in step S12.

### <Step S15>

In step S15, the control portion 5 determines whether or not a password transmitted from the wireless communication apparatus 20 in response to the password transmission instruction sent in step S14, matches a registered password for the particular network specified in the connection request received in step S12. Here, the processes of step S13, step S14, and step S15 are executed by the determination processing portion 52 of the control portion 5.

Upon determining that the password transmitted from the wireless communication apparatus 20 matches the registered password (Yes side at step S15), the control portion 5 moves the process to step S16. In addition, upon determining that the password transmitted from the wireless communication apparatus 20 does not match the registered password (No side at step S15), the control portion 5 moves the process to step S151.

### <Step S151>

In step S151, the control portion 5 notifies, to the wireless communication apparatus 20 that had transmitted the connection request received by the control portion 5 in step S12, that the wireless communication apparatus 20 does not have an authority to connect to the particular network specified in the connection request. Here, the process of step S151 is executed by the first communication processing portion 53 of the control portion 5.

### <Step S16>

In step S16, the control portion 5 establishes a communication connection between the wireless communication apparatus 20 and the image processing apparatus 10 in accordance with the connection request received in step S12. Here, the process of step S16 is an example of the first step of the present invention, and is executed by the first communication processing portion 53 of the control portion 5.

It is noted that processes of step S14 and step S15 may be omitted, and instead of them, the control portion 5 may determine whether or not an apparatus identification information piece transmitted from the wireless communication apparatus 20 matches any of apparatus identification information pieces that had been registered in advance in correspondence with the particular networks. In addition, in step S11, the control portion 5 may cause the wireless communication portion 71 to transmit, among the plurality of beacon signals, only a beacon signal corresponding to the third SSID, and the processes of step S13, step S14, step S15, and step S151 may be omitted.

### [Second communication process]

The following describes, with reference to FIG. 4, an example of the procedure of the second communication process that is executed by the control portion 5 in the image processing apparatus 10. It is noted that the control portion 5 executes the second communication process in a case where a communication connection of any of the wireless communication apparatuses 20 with the image processing apparatus 10 has been established in the first communication process.

### <Step S21>

First, in step S21, the control portion 5 determines whether or not a connection request for a connection to the communication device 40 via the image processing apparatus 10 has been received from the wireless communication apparatus 20.

Upon determining that a connection request for a connection to the communication device 40 via the image processing apparatus 10 has been received from the wireless communication apparatus 20 (Yes side at step S21), the control portion 5 moves the process to step S22. In addition, upon determining that a connection request for a connection to the communication device 40 via the image processing apparatus 10 has not been received from the wireless communication apparatus 20 (No side at step S21), the control portion 5, in step S21, waits for a connection request for a connection to the communication device 40 via the image processing apparatus 10 to be received.

### <Step S22>

In step S22, the control portion 5 determines whether or not a wireless network used by the wireless communication apparatus 20 that had transmitted the connection request received by the control portion 5 in step S21, is any of the particular networks.

For example, when, in step S16 of the first communication process, the control portion 5 establishes a communication connection between the wireless communication apparatus 20 and the image processing apparatus 10, the control portion 5 stores an apparatus identification information piece of the wireless communication apparatus 20 in one of storage areas of the RAM that had been set in correspondence with the wireless networks. The control portion 5 identifies the wireless network used by the wireless communication apparatus 20 by collating the apparatus identification information piece transmitted from the wireless communication apparatus 20 together with the connection request, with the apparatus identification information pieces stored in the storage areas.

Upon determining that the wireless network used by the wireless communication apparatus 20 is any of the particular networks (Yes side at step S22), the control portion 5 moves the process to step S23. In addition, upon determining that the wireless network used by the wireless communication apparatus 20 is not any of the particular networks (No side at step S22), the control portion 5 moves the process to step S221.

### <Step S221>

In step S221, the control portion 5 notifies, to the wireless communication apparatus 20 that had transmitted the connection request received by the control portion 5 in step S21, that the wireless communication apparatus 20 does not have an authority to access the communication network 30. Here, the processes of step S21, step S22, and step S221 are executed by the second communication processing portion 54 of the control portion 5.

### <Step S23>

In step S23, the control portion 5 permits an establishment of a communication connection between the wireless communication apparatus 20 and the communication device 40. For example, the control portion 5 forwards packet data that has been transmitted from the wireless communication apparatus 20, to the communication device 40 by using the wired communication portion 72. Here, the process of step S23 is an example of the second step of the present invention, and is executed by the second communication processing portion 54 of the control portion 5.

### [Access permission process]

The following describes, with reference to FIG. 5, an example of the procedure of the access permission process that is executed by the control portion 5 in the image processing apparatus 10. It is noted that the control portion 5 executes the access permission process in a case where a communication connection of any of the wireless communication apparatuses 20 with the image processing apparatus 10 has been established in the first communication process. That is, the access permission process is executed in parallel with the second communication process.

### <Step S31>

First, in step S31, the control portion 5 determines whether or not an access request for access to the storage portion 8 has been received from the wireless communication apparatus 20.

Upon determining that an access request for access to the storage portion 8 has been received from the wireless communication apparatus 20 (Yes side at step S31), the control portion 5 moves the process to step S32. In addition, upon determining that an access request for access to the storage portion 8 has not been received from the wireless communication apparatus 20 (No side at step S31), the control portion 5, in step S31, waits for an access request for access to the storage portion 8 to be received from the wireless communication apparatus 20.

### <Step S32>

In step S32, the control portion 5 determines whether or not a wireless network used by the wireless communication apparatus 20 that had transmitted the access request received by the control portion 5 in step S31, is a particular network identified by the first SSID. For example, the control portion 5 identifies the wireless network used by the wireless communication apparatus 20 by collating the apparatus identification information piece transmitted from the wireless communication apparatus 20 together with the access request, with the apparatus identification information pieces stored in the storage areas.

Upon determining that the wireless network used by the wireless communication apparatus 20 is the particular network identified by the first SSID (Yes side at step S32), the control portion 5 moves the process to step S33. In addition, upon determining that the wireless network used by the wireless communication apparatus 20 is not the particular network identified by the first SSID (No side at step S32), the control portion 5 moves the process to step S321.

### <Step S321>

In step S321, the control portion 5 notifies, to the wireless communication apparatus 20 that had transmitted the access request received by the control portion 5 in step S31, that the wireless communication apparatus 20 does not have an authority to access the storage portion 8.

### <Step S33>

In step S33, the control portion 5 permits the wireless communication apparatus 20 that had transmitted the access request received by the control portion 5 in step S31, to access the storage portion 8. Here, the processes of step S31, step S32, and step S33 are executed by the access processing portion 55 of the control portion 5. This makes it possible to set an authority to change the setting information stored in the storage portion 8 for each wireless network used by the wireless communication apparatus 20.

### [Job execution process]

The following describes, with reference to FIG. 6, an example of the procedure of the job execution process that is executed by the control portion 5 in the image processing apparatus 10. It is noted that the control portion 5 executes the job execution process in a case where a communication connection of any of the wireless communication apparatuses 20 with the image processing apparatus 10 has been established in the first communication process. That is, the job execution process is executed in parallel with the second communication process and the access permission process.

### <Step S41>

First, in step S41, the control portion 5 determines whether or not a job execution instruction has been received from the wireless communication apparatus 20.

Upon determining that a job execution instruction has been received from the wireless communication apparatus 20 (Yes side at step S41), the control portion 5 moves the process to step S42. In addition, upon determining that a job execution instruction has not been received from the wireless communication apparatus 20 (No side at step S41), the control portion 5, in step S41, waits for a job execution instruction to be received from the wireless communication apparatus 20.

### <Step S42>

In step S42, the control portion 5 determines whether or not a job specified to be executed in the job execution instruction received by the control portion 5 in step S41, is the particular job.

Upon determining that the job specified to be executed in the job execution instruction is the particular job (Yes side at step S42), the control portion 5 moves the process to step S43. In addition, upon determining that the job specified to be executed in the job execution instruction is not the particular job (No side at step S42), the control portion 5 moves the process to step S44.

### <Step S43>

In step S43, the control portion 5 determines whether or not a wireless network used by the wireless communication apparatus 20 that had transmitted the job execution instruction received by the control portion 5 in step S41, is any of the particular networks. For example, the control portion 5 identifies the wireless network used by the wireless communication apparatus 20 by collating the apparatus identification information piece transmitted from the wireless communication apparatus 20 together with the job execution instruction, with the apparatus identification information pieces stored in the storage areas.

Upon determining that the wireless network used by the wireless communication apparatus 20 is any of the particular networks (Yes side at step S43), the control portion 5 moves the process to step S44. In addition, upon determining that the wireless network used by the wireless communication apparatus 20 is not any of the particular networks (No side at step S43), the control portion 5 moves the process to step S431.

### <Step S431>

In step S431, the control portion 5 notifies, to the wireless communication apparatus 20 that had transmitted the job execution instruction received by the control portion 5 in step S41, that the wireless communication apparatus 20 does not have an authority to execute the particular job.

### <Step S44>

In step S44, the control portion 5 executes the job in accordance with the job execution instruction received by the control portion 5 in step S41. Here, the processes of step S41, step S42, step S43, and step S44 are executed by the execution processing portion 56 of the control portion 5. This makes it possible to set jobs that can be executed by the wireless communication apparatus 20 for each wireless network used by the wireless communication apparatus 20.

As described above, in the first communication process, in a case where a connection request for a connection via a particular network among the plurality of wireless networks has been received from any of the wireless communication apparatuses 20, it is determined whether or not a communication connection between the wireless communication apparatus 20 and the image processing apparatus 10 is permitted to be established, based on whether or not the wireless communication apparatus 20 has an authority to connect to the particular network. In addition, in the second communication process, in a case where a connection request for a connection to the communication device 40 via the image processing apparatus 10 has been received from the wireless communication apparatus 20, it is determined whether or not a communication connection between the wireless communication apparatus 20 and the communication device 40 is permitted to be established, based on whether or not a wireless network used by the wireless communication apparatus 20 is any of the particular networks. This makes it possible to maintain the security of the communication network 30 connected to the image processing apparatus 10, and improve the usefulness of the wireless communication apparatuses 20 that perform wireless communications with the image processing apparatus 10.

## Claims

1. An image processing apparatus comprising:
a first communication processing portion configured to, upon receiving, from a wireless communication apparatus, a connection request for a connection via any of a plurality of wireless networks, establish a communication connection between the wireless communication apparatus and the image processing apparatus; and
a second communication processing portion configured to, upon receiving, from the wireless communication apparatus, a connection request for a connection to a communication device via the image processing apparatus, determine whether or not to permit an establishment of a communication connection between the wireless communication apparatus and the communication device based on a wireless network used by the wireless communication apparatus among the plurality of wireless networks.

2. The image processing apparatus according to claim 1, further comprising:
a determination processing portion configured to determine whether or not the wireless communication apparatus has an authority to connect to any of one or more particular networks among the plurality of wireless networks, wherein
when a connection request for a connection via any of the particular networks is received from the wireless communication apparatus, the first communication processing portion determines whether or not to permit an establishment of a communication connection between the wireless communication apparatus and the image processing apparatus, based on a determination result of the determination processing portion, and
in a case where the wireless network used by the wireless communication apparatus among the plurality of wireless networks is one of the particular networks, the second communication processing portion permits an establishment of a communication connection between the wireless communication apparatus and the communication device.

3. The image processing apparatus according to claim 2, wherein
two or more wireless networks among the plurality of wireless networks can be set as the particular networks,
the image processing apparatus further comprises:
an access processing portion configured to, upon receiving, from the wireless communication apparatus, an access request for access to a storage portion that stores setting information of the image processing apparatus, determine whether or not to permit the wireless communication apparatus to access the storage portion based on one of the particular networks used by the wireless communication apparatus, and
the determination processing portion determines whether or not the wireless communication apparatus has an authority to connect to each of the particular networks.

4. The image processing apparatus according to claim 2, wherein
the determination processing portion sends a password transmission instruction to the wireless communication apparatus, the password transmission instruction instructing the wireless communication apparatus to transmit a password that is input by a user of the wireless communication apparatus, and the determination processing portion determines that the wireless communication apparatus has an authority to connect to one of the particular networks, when a password transmitted from the wireless communication apparatus in response to the password transmission instruction matches a registered password that had been set in advance in correspondence with the one of the particular networks.

5. The image processing apparatus according to claim 1, further comprising:
an execution processing portion configured to, upon receiving, from the wireless communication apparatus, a job execution instruction to execute a predetermined particular job, determine whether or not to execute the particular job, based on the wireless network used by the wireless communication apparatus among the plurality of wireless networks.

6. The image processing apparatus according to claim 1, further comprising either or both of:
an image reading portion configured to read image data from a document sheet; and
an image forming portion configured to form an image based on image data.

7. A communication method comprising:
a first step of, upon receiving, from a wireless communication apparatus, a connection request for a connection via any of a plurality of wireless networks, establishing a communication connection between the wireless communication apparatus and an image processing apparatus; and
a second step of, upon receiving, from the wireless communication apparatus, a connection request for a connection to a communication device via the image processing apparatus, determining whether or not to permit an establishment of a communication connection between the wireless communication apparatus and the communication device based on a wireless network used by the wireless communication apparatus among the plurality of wireless networks.

## Amended claims

### Amended claims under Art. 19.1 PCT

**1.** (Amended) An image processing apparatus comprising:
a first communication processing portion configured to, upon receiving, from a wireless communication apparatus, a connection request for a connection via any of a plurality of wireless networks, establish a communication connection between the wireless communication apparatus and the image processing apparatus;
a second communication processing portion configured to, upon receiving, from the wireless communication apparatus, a connection request for a connection to a communication device via the image processing apparatus, determine whether or not to permit an establishment of a communication connection between the wireless communication apparatus and the communication device based on a wireless network used by the wireless communication apparatus among the plurality of wireless networks;
a determination processing portion configured to determine whether or not the wireless communication apparatus has an authority to connect to any of one or more particular networks among the plurality of wireless networks; and
an access processing portion configured to, in a case where two or more wireless networks among the plurality of wireless networks can be set as the particular networks, upon receiving, from the wireless communication apparatus, an access request for access to a storage portion that stores setting information of the image processing apparatus, determine whether or not to permit the wireless communication apparatus to access the storage portion based on one of the particular networks used by the wireless communication apparatus, wherein
when a connection request for a connection via any of the particular networks is received from the wireless communication apparatus, the first communication processing portion determines whether or not to permit an establishment of a communication connection between the wireless communication apparatus and the image processing apparatus, based on a determination result of the determination processing portion,
in a case where the wireless network used by the wireless communication apparatus among the plurality of wireless networks is one of the particular networks, the second communication processing portion permits an establishment of a communication connection between the wireless communication apparatus and the communication device, and
the determination processing portion determines whether or not the wireless communication apparatus has an authority to connect to each of the particular networks.

**2.** (Amended) An image processing apparatus comprising:
a first communication processing portion configured to, upon receiving, from a wireless communication apparatus, a connection request for a connection via any of a plurality of wireless networks, establish a communication connection between the wireless communication apparatus and the image processing apparatus;
a second communication processing portion configured to, upon receiving, from the wireless communication apparatus, a connection request for a connection to a communication device via the image processing apparatus, determine whether or not to permit an establishment of a communication connection between the wireless communication apparatus and the communication device based on a wireless network used by the wireless communication apparatus among the plurality of wireless networks; and
an execution processing portion configured to, upon receiving, from the wireless communication apparatus, a job execution instruction to execute a predetermined particular job, determine whether or not to execute the particular job, based on the wireless network used by the wireless communication apparatus among the plurality of wireless networks.

**3.** (Amended) The image processing apparatus according to claim 1, further comprising either or both of:
an image reading portion configured to read image data from a document sheet; and
an image forming portion configured to form an image based on image data.

**4.** (Amended) The image processing apparatus according to claim 2, further comprising either or both of:
an image reading portion configured to read image data from a document sheet; and
an image forming portion configured to form an image based on image data.

**5.** (Amended) A communication method comprising:
a first step of, upon receiving, from a wireless communication apparatus, a connection request for a connection via any of a plurality of wireless networks, establishing a communication connection between the wireless communication apparatus and an image processing apparatus;
a second step of, upon receiving, from the wireless communication apparatus, a connection request for a connection to a communication device via the image processing apparatus, determining whether or not to permit an establishment of a communication connection between the wireless communication apparatus and the communication device based on a wireless network used by the wireless communication apparatus among the plurality of wireless networks;
a third step of determining whether or not the wireless communication apparatus has an authority to connect to any of one or more particular networks among the plurality of wireless networks; and
a fourth step of, in a case where two or more wireless networks among the plurality of wireless networks can be set as the particular networks, upon receiving, from the wireless communication apparatus, an access request for access to a storage portion that stores setting information of the image processing apparatus, determining whether or not to permit the wireless communication apparatus to access the storage portion based on one of the particular networks used by the wireless communication apparatus, wherein
in the first step, when a connection request for a connection via any of the particular networks is received from the wireless communication apparatus, it is determined whether or not to permit an establishment of a communication connection between the wireless communication apparatus and the image processing apparatus, based on a determination result of the determination processing portion,
in the second step, in a case where the wireless network used by the wireless communication apparatus among the plurality of wireless networks is one of the particular networks, an establishment of a communication connection between the wireless communication apparatus and the communication device is permitted, and
in the third step, it is determined whether or not the wireless communication apparatus has an authority to connect to each of the particular networks.

**6.** (Amended) A communication method comprising:
a first step of, upon receiving, from a wireless communication apparatus, a connection request for a connection via any of a plurality of wireless networks, establishing a communication connection between the wireless communication apparatus and an image processing apparatus;
a second step of, upon receiving, from the wireless communication apparatus, a connection request for a connection to a communication device via the image processing apparatus, determining whether or not to permit an establishment of a communication connection between the wireless communication apparatus and the communication device based on a wireless network used by the wireless communication apparatus among the plurality of wireless networks; and
a third step of, upon receiving, from the wireless communication apparatus, a job execution instruction to execute a predetermined particular job, determining whether or not to execute the particular job, based on the wireless network used by the wireless communication apparatus among the plurality of wireless networks.
